# EUROPÄISCHE PATENTANMELDUNG

(11) **EP 2 322 260 A2**
(43) Veröffentlichungstag der Anmeldung: **18.05.2011**
(21) Anmeldenummer: 10014457.5
(22) Anmeldetag: 10.11.2010
(51) Int. Cl.: B01D 1/00

(54) **Trennanordnung und Trennverfahren**

(30) Priorität: 16.11.2009 DE 102009053045
(71) Anmelder: H2O GmbH, 79585 Steinen (DE)
(72) Erfinder: Fickenscher, Matthias, 79585 Steinen (DE)
(74) Vertreter: Maucher, Wolfgang

(57) **Zusammenfassung**

Die Erfindung betrifft eine Trennanordnung (1) zur Trennung disperser Systeme mit einer wässrigen, kontinuierlichen Phase und einer in dieser dispergierten, flüssigen, mit Wasser nicht mischbaren organischen Phase, wobei eine Verdampfungseinrichtung (2) die disperse Phase der Dispersion in ihrem Bodenbereich als Verdampfersumpf durch Destillation aufkonzentriert. Um eine Anordnung (1) zur Verfügung zu haben, mittels derer zum einen eine hohe Aufkonzentration der dispersen Phase der Dispersion erreicht werden kann, und bei der der Betrieb zum anderen sowohl hinsichtlich des Durchsatzes als auch des Energieverbrauchs zu wirtschaftlich günstigen Konditionen möglich ist, ist es vorgesehen, dass die Verdampfungseinrichtung (2) in einem gemeinsamen Gehäuse mit einer Trennvorrichtung (3) angeordnet und mit dieser über eine verschließbare Leitung (7) verbunden ist, in welche Trennvorrichtung (3) die Verdampfungseinrichtung (2) wenigstens einen Teil der aufkonzentrierten Dispersion gesteuert entleert und dass die Trennvorrichtung (3) die Phasen der Dispersion im wesentlichen entmischt und diese voneinander trennt. Außerdem betrifft die Erfindung ein Verfahren zum Aufarbeiten von Abwässern.(Fig.1)

## Beschreibung

Die Erfindung betrifft eine Trennanordnung zur Trennung disperser Systeme mit einer wässrigen, kontinuierlichen Phase und einer in dieser dispergierten, flüssigen, mit Wasser nicht mischbaren organischen Phase, wobei eine Verdampfungseinrichtung die disperse Phase der Dispersion in ihrem Bodenbereich als Verdampfersumpf durch Destillation aufkonzentriert und mit einer Trennvorrichtung über eine verschließbare Leitung verbunden ist, in welche Trennvorrichtung die Verdampfungseinrichtung wenigstens einen Teil der aufkonzentrierten Dispersion gesteuert entleert und welche die Phasen der Dispersion im wesentlichen entmischt und diese voneinander trennt. Außerdem betrifft die Erfindung auch ein Verfahren zur Aufarbeitung von Abwässern.

Bei einer Vielzahl industrieller Prozesse, beispielsweise bei der Metallverarbeitung, fallen mit unterschiedlichen Schadstoffen verschieden stark verschmutzte Abwässer an, die als belastete Spül- oder Waschwasser oder aber auch bereits in dispergierter Form als Kühl- oder Schmiermittel eingesetzt werden. Die Schadstoffbelastung erfordert eine Aufbereitung, bevor eine Ableitung möglichst gering belasteten Abwassers in eine Kläranlage, öffentliche Kanalisation oder Gewässer möglich ist. Zunehmend wird jedoch auch diese nicht mehr zugestanden, so dass eine Alternative in der Wiederaufbereitung für eine erneute Nutzung zumindest des Wasseranteils besteht, während die organische Phase bspw. einer Verbrennung zugeführt werden kann.

Um die Phasen solcher disperser Systeme also zu trennen, werden die Dispersionen beispielweise thermischen Trennverfahren unterworfen, bei welchen die disperse Phase aufkonzentriert wird. Hierzu wird die in eine Verdampfungseinrichtung zulaufende, sich im Bodenbereich der Verdampfungseinrichtung sammelnde Dispersion als sogenannter Verdampfersumpf beheizt und zum Sieden gebracht. In der über dem siedenden Sumpf befindlichen Gasphase herrscht aufgrund unterschiedlich hoher Dampfdrücke der Phasen bei der gleichen Temperatur eine andere Zusammensetzung der Dispersion, nämlich die der zugehörigen Partialdrücke bei der gegebenen Temperatur, so dass bei Kondensation der Gasphase eine Flüssigkeit mit eben deren Zusammensetzung erhalten wird. Deren Anteil an niedriger siedender, kontinuierlicher Phase ist höher als in dem Verdampfersumpf, wodurch dieser mit zunehmender Dauer zum einen an dieser Phase verarmt, zum anderen die Aufkonzentration auch durch Rückführung der dispersen Phase in den Sumpf zunimmt .

Das Ziel der thermischen Trennung ist hierbei stets, die maximal mögliche Aufkonzentration des Sumpfs zu erreichen. Mit steigender Aufkonzentration sinkt dabei zum einen die Durchsatzleistung, zum anderen steigt der Energieverbrauch zur weiteren Verdampfung der kontinuierlichen Phase stetig an. Wird die Verdampfungseinrichtung außerdem mit einem verminderten Druck zur Erniedrigung der Siedetemperatur des zu trennenden Gemischs betrieben, so muss die betreffende Pumpe eine immer größere Arbeit gegen den durch die Aufkonzentration bedingten schlechteren Wärmeübergang des Heizmediums auf die Lösung verrichten, so dass auch deren Energiebedarf ansteigt.

Bekannt ist hierbei aus der DE 41 00 242 C2 bereits eine Trennanordnung mit einer der Verdampfungseinrichtung nachgeschalteten Trennvorrichtung, bei der eine aufkonzentrierte Dispersion durch eine Pumpe über eine Leitungssystem in eine Trennvorrichtung transportiert wird, in welcher die dann abgekühlte Dispersion erneut erhitzt wird, wobei diese Anordnung einen nicht unbeträchtlichen Energieeinsatz nötig macht.

Es besteht daher die Aufgabe, eine Anordnung oder ein Verfahren anzubieten, mittels derer zum einen eine hohe Aufkonzentration der dispersen Phase der Dispersion erreicht werden kann, und bei denen der Betrieb bzw. die Durchführung zum anderen sowohl hinsichtlich des Durchsatzes als auch des Energieverbrauchs zu wirtschaftlich günstigen Konditionen möglich ist.

Diese Aufgabe wird gelöst durch eine Trennanordnung der eingangs erwähnte Art, bei der die Verdampfungseinrichtung in einem gemeinsamen Gehäuse mit einer Trennvorrichtung angeordnet ist und die Trennvorrichtung (3) ein gegenüber der Verdampfungseinrichtung (2) tieferes Niveau aufweist. Die Trennung der dispersen Phase der Dispersion des Verdampfersumpfs von der kontinuierlichen Phase wird also dadurch erzielt, dass mit der Verdampfungseinrichtung eine Trennvorrichtung integriert angeordnet ist, der bezüglich der Verdampfungseinrichtung für den in die Vorrichtung abgelassenen Verdampfersumpf eine Art Beruhigungszone bildet. Dabei wird bei Erreichen einer bestimmten Konzentration an disperser Phase in dem Verdampfersumpf die Trennvorrichtung mit dem flüssigen Verdampfersumpf aus der Verdampfungseinrichtung befüllt und die Zuleitung danach wieder verschlossen. Danach hat die aufkonzentrierte Dispersion in der Trennvorrichtung Zeit sich zu beruhigen, wodurch es zur Koaleszenz der dispersen Phase unter Verkleinerung ihrer Oberfläche und schließlich zur Bildung einer Phasengrenze kommt. Diese trennt eine obere angereicherte disperse Phase von einer unteren Phase, die nur noch einen geringen dispersen Anteil aufweist. Die Trennvorrichtung führt dann die beiden entstandenen, im wesentlichen entmischten Phasen einer weiteren Verwertung zu. Durch die beschriebene Anordnung kann eine disperse Phase aus der Trennanordnung entfernt werden, deren Konzentration erheblich höher als im Verdampfersumpf ist, die erzielbare Aufkonzentration liegt bei etwa 95%. Außerdem ist der Energieverbrauch geringer und die Durchsatzleistung höher als bei einer auf dieser Endkonzentration betriebenen Verdampfungseinrichtung. Bei entsprechenden Druckverhältnissen kann zumindest ein Teil des Verdampfersumpfs pumpenlos in die Trennvorrichtung entleert werden, wenn erfindungsgemäß die Trennvorrichtung gegenüber der Verdampfungseinrichtung ein tieferes Niveau aufweist, so dass die Schwerkraft des Sumpfs zu ihrem Transport über die Leitung ausreicht. Ein eventueller Rücktransport der kontinuierlichen äußeren Phase nach der Trennung der Dispersion aus der Trennvorrichtung zurück in die Verdampfungseinrichtung wird dann aber zweckmäßigerweise durch ein Pumpmittel angetrieben.

Eine hohe Aufkonzentration der dispersen Phase lässt sich bei einer vorteilhaften Ausführung der Trennanordnung erzielen, bei welcher die dispergierte organische Phase des dispersen Systems durch wenigstens ein Fett oder dergleichen Kohlenwasserstoffverbindung gebildet ist, wodurch die Dispersion eine Öl/Wasser- Emulsion bildet. Es sind hinsichtlich der Dispersion aber im Grunde auch jegliche Arten von nicht wassermischbaren Lösungen sowie auch ausgefällte Substanzen wie Salze denkbar.

Zur Senkung der Siedetemperatur der zu trennenden Dispersion, entweder um Heizenergie einzusparen oder solche Dispersionen zu destillieren, bei denen insbesondere die im Verdampfersumpf angereicherte disperse Phase keine genügend hohe Temperaturstabilität aufweist, kann bei einer anderen vorteilhaften Ausgestaltung der Trennanordnung die Verdampfungseinrichtung mit einer Pumpeinrichtung zur Druckerniedrigung versehen sein. Hierbei kann es sich um eine Vakuumpumpe handeln, die beispielsweise eine Wälzkolbenpumpe mit zugeordneter Vorpumpe aufweist.

Nachdem die Verdampfungseinrichtung die disperse Phase der Dispersion im Verdampfersumpf vorkonzentriert hat, und dieser nach Erreichen einer bestimmten Konzentration, zum Beispiel 30%, bei der bereits eine Agglomeration von Bestandteilen der dispersen Phase feststellbar sein kann, aus der Verdampfungseinrichtung abgelassen wurde, soll dieser Verdampfersumpf in der Trennvorrichtung zur Ruhe kommen, weswegen bei einer vorteilhaften Ausführung der Trennanordnung die Trennvorrichtung durch ein Behältnis zur Aufnahme der Dispersion gebildet ist. Die mit der Agglomeration bereits begonnene Destabilisierung der Dispersion setzt sich abhängig vom spezifischen Gewicht der Phasen fort, wobei im Fall geringerer Dichte die innere, disperse Phase entweder sogenannt aufrahmt (auf der kontinuierlichen Phase aufschwimmt), im anderen Fall sedimentiert. Handelt es sich bei der Dispersion um eine Emulsion können deren Tropfen bei der Destabilisierung zusammenfließen, was Koaleszenz genannt wird, und auf die Tendenz zur Verkleinerung der Gesamtoberfläche (Grenzflächenspannung) zurückzuführen ist. Schließlich bricht das Stoffgemisch in zwei kontinuierliche Phasen.

Bei einer zweckmäßigen Weiterbildung der Trennanordnung kann ergänzend zu dem zur Beruhigung der Dispersion vorgesehenen Behältnis in der Trennvorrichtung ein weiteres Trennmedium, beispielweise ein Koaleszenzabscheider, eine Zentrifuge zur Erhöhung der Beschleunigungskraft und/oder ein Filter vorgesehen sein, das weitere disperse Anteile aus der wässrigen Phase extrahiert. Überdies kann das Trennmedium aber auch den Trennvorgang selbst übernehmen.

Bei weiteren vorteilhafte Ausgestaltungen der erfindungsgemäßen Trennanordnung kann es zur Beschleunigung des Trennprozesses beispielsweise vorgesehen sein, dass die die Trennvorrichtung eine Temperiereinrichtung aufweist, mittels der sie beheizt oder gekühlt werden kann oder dass die Trennvorrichtung mit einer Dosiereinrichtung versehen ist, mittels derer der Dispersion zur Beschleunigung des Trennprozesses ein Spaltmittel zufügbar ist.

Zweckmäßigerweise sind bei einer Ausführung der erfindungsgemäßen Trennanordnung die Verdampfungseinrichtung und die Trennvorrichtung in ihrem gemeinsamen Gehäuse über eine Leitung verbunden, in deren Verlauf zumindest ein Sperrorgan, insbesondere ein elektrisch, pneumatisch oder hydraulisch betätigbares Ventil angeordnet ist, so dass zwischen den beiden Räumen jeweils ein gesteuerter Austausch von Dispersion oder gereinigter äußerer Phase stattfinden kann.

Um entweder eine vordefinierte Menge an vorkonzentriertem Verdampfersumpf aus der Verdampfungseinrichtung in die Trennvorrichtung entleeren zu können oder aus der Trennvorrichtung eine der getrennten Phasen bei Erreichen einer bestimmten Höhe in dem Behälter oder Trennmedium ausschleusen zu können, kann es bei einer Weiterbildung der Trennanordnung vorgesehen sein, dass an der Trennvorrichtung wenigstens ein Sensor zur Bestimmung einer Füllstandshöhe angeordnet ist.

Zur Ausschleusung wenigstens einer der getrennten Phasen aus der Trennvorrichtung ist diese zweckmäßigerweise bei einer Ausführungsform der Trennanordnung mit wenigstens einer verschließbaren Öffnung oder einer die Vorrichtungsbegrenzung durchtrennenden, sperrbaren Leitung versehen.

Um etwa eine nach Phasentrennung der Dispersion aufschwimmende disperse Phase aus der Trennvorrichtung auszuschleusen, kann diese vorteilhaft mit wenigstens einer weiteren verschließbaren Öffnung versehen sein, über welche der Druck in der Trennvorrichtung manipulierbar ist. Über diese Öffnung kann etwa zum Ausschleusen der betreffenden Phase Druckluft dem Innern der Trennvorrichtung zugeführt werden. Die gleiche oder aber eine weitere verschließbare Öffnung der Trennvorrichtung kann ebenfalls der Manipulation der Druckverhältnisse im Vorrichtungsinnern dienen, etwa um den Druck in dem Behältnis demjenigen in der Verdampfungseinrichtung anzupassen, weswegen hinter einer solchen weiteren Öffnung eine entsprechende Pumpe vorgesehen sein kann.

Soll das Entleeren eines Verdampfersumpfanteils gesteuert nach zumindest ähnlichen Kriterien ablaufen, ist es von Vorteil an der Trennanordnung eine Messeinrichtung zur Erfassung einer Steuergröße hinsichtlich der Konzentration der Dispersion in der Verdampfungseinrichtung vorzusehen. Die Messeinrichtung kann bei bekanntem Prozessparametern und -ablauf in der Verdampfungseinrichtung beispielsweise lediglich eine Zeitmessung durchführen und nach Ablauf einer jeweils zumindest ähnlichen Zeit erneut einen Teil des Sumpfs ablassen. Zur Verwendung als Steuerkriterium könnten aber zum Beispiel auch die Konzentration der dispersen Phase im Sumpf oder die Leistungsaufnahme einer Pumpe der Verdampfungseinrichtung bestimmt werden.

Die vorgenannte Aufgabe wird auch gelöst durch ein Verfahren zur Aufarbeitung von Abwässern, die eine Dispersion aus Wasser als kontinuierlicher und einer mit Wasser nicht mischbaren, organischen Kohlenwasserstoffverbindung als disperser Phase aufweisen und bevorzugt eine Öl/Wasser-Emulsion bilden, insbesondere unter Einsatz einer vorstehend beschriebenen Trennanordnung. Das erwähnte Verfahren wird dabei zumindest mit den folgenden Verfahrenschritten durchgeführt:
a) Zunächst wird die disperse Phase der Dispersion in einer Verdampfungseinrichtung durch Destillation des in deren Bodenbereich befindlichen Verdampfersumpfs aufkonzentriert; die Destillation kann etwa als Vakuumdestillation bei erniedrigtem Druck stattfinden ;
b) bei Erreichen eines vorgebbaren Kriteriums wird zumindest ein Teil der den Verdampfersumpf bildenden aufkonzentrierten Dispersion in eine Trennvorrichtung ausgeschleust;
c) der ausgeschleuste Teil der Dispersion wird in einem Behältnis der Trennvorrichtung bis zur Trennung der Phasen der Dispersion ruhengelassen, so dass die bereits aufkonzentrierte Dispersion sich weiter destabilisiert; hierbei kommt es zur Agglomeration der dispersen Phase, wobei die Trennung durch die Schwerkraft weiter unterstützt wird und hierdurch die spezifisch leichtere der Phasen auf der anderen aufschwimmt, bis es zu einer sichtbaren Trennung der Phasen kommt, bei welcher jeweils eine der Phasen nur noch geringe Bestandteile der anderen aufweist;
d) die aufschwimmende Phase wird aus der Trennvorrichtung ausgeschleust, wobei sie beispielsweise mittels eines an das Behältnis angelegten Überdrucks durch eine auf einem bestimmten Niveau der Trennvorrichtung angeordnete Öffnung respektive die daran angeschlossene Leitung gedrückt wird;
e) die übrige Phase wird aus der Trennvorrichtung ausgeschleust, beispielsweise durch ein am Boden der Trennvorrichtung angeordneten Ablass oder ein Ventil.

Eine zweckmäßige Weiterbildung des Verfahrens kann darin bestehen, dass die getrennte kontinuierliche Phase in den Verdampfersumpf zurückgeführt und diesem erneut beigemischt wird und derart zirkuliert. Diese Rückleitung kann zum Beispiel über die bereits für die Entleerung des Sumpfs in die Trennvorrichtung benutzte Leitung vollzogen werden.

In einer vorteilhaften Variante des Verfahrens kann die Trennvorrichtung mit der Dispersion drucklos befüllt werden, wofür an der Trennvorrichtung eine Einrichtung zur Druckregelung angeordnet sein kann, die den Druck in der Trennvorrichtung an den Druck in der Verdampfungseinrichtung anpasst. Dies kann z.B. über eine Öffnung mit Ventil und zugeordneter Pumpe geschehen. Hierdurch kann sich die Trennvorrichtung trotz Integration mit der Verdampfungseinrichtung in einem gemeinsamen Gehäuse auch auf einem tieferen Niveau befinden so dass der Verdampfersumpf ohne diesen zu pumpen allein durch die Schwerkraft aus der Verdampfungseinrichtung in die Trennvorrichtung entleert werden kann, da sich die betreffenden Behältnisse wie kommunizierende Gefäße verhalten.

Eine weitere Variante des Verfahrens kann vorteilhafterweise darin bestehen, dass unter Umkehrung der Reihenfolge der Schritte d) und e) zunächst die unterhalb der Grenzfläche befindliche Phase aus der Trennvorrichtung ausgeschleust wird. Hierzu kann an oder im Bereich der tiefsten Bodenstelle der Trennvorrichtung ein Auslass vorgesehen sein, über den die Phase ausgeschleust wird. Abhängig von dem spezifischen Gewicht der Phasen kann dies entweder die dann spezifisch schwerere kontinuierliche Phase sein oder aber im umgekehrten Fall auch die sedimentierte disperse Phase, die sich dann am Boden abgesetzt hätte.

Um einen noch höheren Konzentrationsgrad der dispersen Phase zu erreichen kann es bei einer anderen zweckmäßigen Variante des Verfahrens vorgesehen sein, dass der Vorgang des Ruhenlassens der Dispersion in Punkt c) durch einen Zentrifugier- oder dergleichen Abscheide- und/oder einen Filtriervorgang ergänzt oder ersetzt wird; Je nach Ergänzung des Verfahrens kann dann evtl. einer der folgenden Ausschleusevorgänge aus der Trennvorrichtung entfallen.

Bei einer anderen vorteilhaften Variante des erfindungsgemäßen Verfahrens kann der Vorgang des Ruhenlassens der Dispersion in Punkt c) alternativ durch die Erhöhung oder Erniedrigung der Temperatur oder der Beigabe eines Trennungshilfsmittels unterstützt werden.

Soll ein nachvollziehbares und in gewissen Grenzen wiederholbares Kriterium zum Auslösen der Entleerung des Verdampfersumpfs etabliert werden, kann bei einer zweckmäßigen Variante des Verfahrens das Kriterium zum Ausschleusen des Teils der aufkonzentrierten Dispersion aus der Verdampfungseinrichtung in die Trennvorrichtung durch eine Messeinrichtung zur Bestimmung der Zeit, der Konzentration oder des Energiebedarfs ermittelt werden, wobei bei Erfüllung des vorgegebenen Kriteriums wiederum die Erzeugung eines ein Ventil und/oder eine Pumpe steuernden Steuersignals getriggert werden kann.

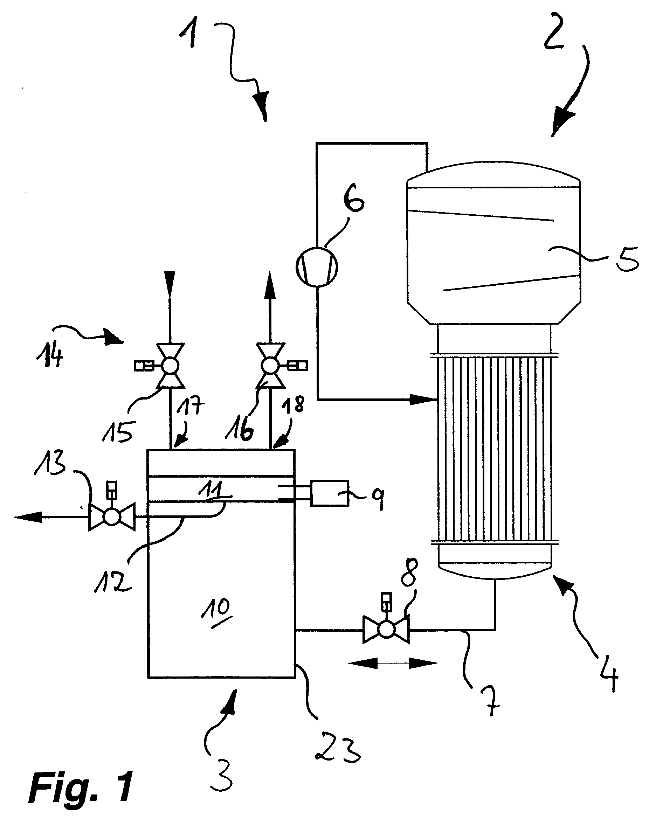

Die Erfindung wird nachstehend anhand eines Ausführungsbeispiels in der Zeichnung näher erläutert. Die einzige Figur (Fig.1) zeigt dabei eine im Ganzen mit 1 bezeichnete Trennanordnung, auf deren für den Betrachter rechten Seite zunächst eine Verdampfungseinrichtung 2 erkennbar ist. In die Verdampfungseinrichtung 2 wird die nicht weiter zu erkennende, flüssige Dispersion eingeleitet, diese setzt sich im Bodenbereich der Verdampfungseinrichtung 2 als Verdampfersumpf ab und wird durch eine dort befindliche, nicht dargestellte Heizung 4 beheizt, so dass diese durch Erhöhung Ihres Dampfdrucks über den herrschenden Druck verdampft wird. Durch Abscheiden eines Teils der kontinuierlichen, wässrigen Phase der Dispersion im Abscheider 5 wird die den Verdampfersumpf bildende Dispersion vorkonzentriert. Zur Druckerniedrigung ist an der Verdampfungseinrichtung 2 eine Vakuumpumpe 6 angeordnet. Nach Erfüllung eines mit der Konzentration des Verdampfersumpfs verknüpften Kriteriums, etwa dem Ablauf einer bestimmten Heizzeit, wird ein Teil des in der Verdampfungseinrichtung 2 befindlichen Verdampfersumpfs über die mit einem regelbaren Ventil 8 versehene Leitung 7 in die Trennvorrichtung 3 entleert. Diese Trennvorrichtung 3 befindet sich mit der Verdampfungseinrichtung 2 in einem gemeinsamen, in der Fig.1 nicht weiter dargestellten Gehäuse.

Wurde die gewünschte Menge der vorkonzentrierten Dispersion aus der Verdampfungseinrichtung 2 ausgeleitet, wird das Ventil 8 geschlossen und die Dispersion in dem Behältnis der Trennvorrichtung 3 ruhen gelassen, bis sich die disperse Phase nach Agglomeration bzw. Koaleszenz von der kontinuierlichen Phase im wesentlichen getrennt hat. Im Falle einer dichteren getrennten kontinuierlichen Phase 10 schwimmt die getrennte disperse Phase 11 auf dieser auf. Zur Ermittlung der Höhe dieser Phase 11 ist an der Trennvorrichtung 3 eine Sonde 9 zu erkennen. Mittels der auf einer bestimmten Höhe der Trennvorrichtung 3 angeordneten Anschlusses für eine Leitung 12 mit Ventil 13, lässt sich die getrennte disperse Phase 11 aus der Trennvorrichtung 3 ausschleusen, indem sie über eine mittels eines Ventils 15 trennbaren Druckluftzufuhr 14 mit einem erhöhten Druck beaufschlagt wird. Das Innere der Trennvorrichtung 3 bzw. ihres Behältnisses 23 konnte vorher über eine mittels eines Ventils 16 von dem Behältnis 23 getrennten, nicht weiter dargestellten Pumpe an die in der Verdampfungseinrichtung 2 herrschenden Druckverhältnisse angepasst werden, so dass der Verdampfersumpf sich bei Öffnung des Ventils 8 schwerkraftbedingt in das Behältnis 23 bzw. die Trennvorrichtung 3 entleerte. Nach Ausschleusen der getrennten dispersen Phase 11 aus der Trennvorrichtung 3 kann die getrennte kontinuierliche Phase 10 über die Leitung 7 in die Verdampfungseinrichtung 2 zurückgeführt werden. Die Ventile 15, 16 sind somit Öffnungen 17, 18 der Trennvorrichtung 3 bzw. des Behältnisses 23 zugeordnet, die der Manipulation der Druckverhältnisse im Innern der Trennvorrichtung 3 dienen. Nicht weiter dargestellt ist in der Fig. 1 die Messeinrichtung 19 zur Erfassung einer Steuergröße hinsichtlich der Konzentration der Dispersion in der Verdampfungseinrichtung 2.

Demnach betrifft die vorstehend beschriebene Erfindung eine Trennanordnung 1 zur Trennung disperser Systeme mit einer wässrigen, kontinuierlichen Phase und einer in dieser dispergierten, flüssigen, mit Wasser nicht mischbaren organischen Phase, wobei eine Verdampfungseinrichtung 2 die disperse Phase der Dispersion in ihrem Bodenbereich als Verdampfersumpf durch Destillation aufkonzentriert und außerdem ein Verfahren zur Aufarbeitung von Abwässern, die eine Dispersion aus Wasser als kontinuierlicher und einer mit Wasser nicht mischbaren, organischen Kohlenwasserstoffverbindung als disperser Phase aufweisen.

Um eine Anordnung oder ein Verfahren zur Verfügung zu haben, mittels derer zum einen eine hohe Aufkonzentration der dispersen Phase der Dispersion erreicht werden kann, und bei denen der Betrieb bzw. die Durchführung zum anderen sowohl hinsichtlich des Durchsatzes als auch des Energieverbrauchs zu wirtschaftlich günstigen Konditionen möglich ist, ist es vorgesehen, dass die Verdampfungseinrichtung 2 in einem gemeinsamen Gehäuse mit einer Trennvorrichtung 3 angeordnet und mit dieser über eine verschließbare Leitung 7 verbunden ist, in welche Trennvorrichtung 3 die Verdampfungseinrichtung 2 wenigstens einen Teil der aufkonzentrierten Dispersion gesteuert entleert und dass die Trennvorrichtung 3 die Phasen der Dispersion im wesentlichen entmischt und diese voneinander trennt. Bei dem Verfahren wird die disperse Phase der Dispersion zunächst in einer Verdampfungseinrichtung durch Destillation des in deren Bodenbereich befindlichen Verdampfersumpfs aufkonzentriert, sodann wird bei Erreichen eines vorgebbaren Kriteriums zumindest eines Teils der den Verdampfersumpf bildenden aufkonzentrierten Dispersion in eine Trennvorrichtung 3 ausgeschleust. Der ausgeschleuste Teil der Dispersion wird in einem Behältnis 23 der Trennvorrichtung 3 bis zur Trennung der Phasen der Dispersion ruhen gelassen und danach werden die getrennten Phasen 10, 11 aus der Trennvorrichtung 3 nacheinander ausgeschleust.

Durch die Trennanordnung 1 bzw. das Verfahren lässt sich die die erzielbare Aufkonzentration einer Öl/Wasser-Emulsion bis zu einem Gehalt an disperser Ölphase von über 95% steigern, obwohl die Aufkonzentration in der Verdampfungseinrichtung 2 selbst nur 30 bis 40% Ölgehalt beträgt.Darüber hinaus ist der notwendige Energieverbrauch gegenüber einem auf einer Endkonzentration von 95% Ölgehalt gefahrenen Verdampfungseinrichtung 2 deutlich reduziert ebenso wie die Durchsatzleistung der Verdampfungseinrichtung 2 demgegenüber wesentlich höher ist. Überdies treten auch das sogenannte "Scaling" und das "Fouling" an den Wärmetauscherflächen und damit der Rückgang des Wirkungsgrad der Verdampfungseinrichtung 2 weniger stark in Erscheinung, somit ist der Reinigungsbedarf des betreffenden Wärmetauschers signifikant geringer.

## Patentansprüche

1. Trennanordnung zur Trennung disperser Systeme mit einer wässrigen, kontinuierlichen Phase und einer in dieser dispergierten, flüssigen, mit Wasser nicht mischbaren organischen Phase, wobei eine Verdampfungseinrichtung die disperse Phase der Dispersion in ihrem Bodenbereich als Verdampfersumpf durch Destillation aufkonzentriert und mit einer Trennvorrichtung über eine verschließbare Leitung verbunden ist, in welche Trennvorrichtung die Verdampfungseinrichtung wenigstens einen Teil der aufkonzentrierten Dispersion gesteuert entleert und welche die Phasen der Dispersion im wesentlichen entmischt und diese voneinander trennt, **dadurch gekennzeichnet, dass** die Verdampfungseinrichtung (2) in einem gemeinsamen Gehäuse mit der Trennvorrichtung (3) angeordnet ist und dass die Trennvorrichtung (3) ein gegenüber der Verdampfungseinrichtung (2) tieferes Niveau aufweist.

2. Trennanordnung nach Anspruch 1,**dadurch gekennzeichnet, dass** die dispergierte organische Phase durch wenigstens ein Fett oder dergleichen Kohlenwasserstoffverbindung gebildet ist.

3. Trennanordnung nach Anspruch 1 oder 2, **dadurch gekennzeichnet, dass** die Verdampfungseinrichtung (2) mit einem Pumpmittel (6) zur Druckerniedrigung versehen ist.

4. Trennanordnung nach einem der Ansprüche 1 bis 3, dass die Trennvorrichtung (3) durch ein Behältnis (23) zur Aufnahme der Dispersion gebildet ist.

5. Trennanordnung nach einem der vorhergehenden Ansprüche, **dadurch gekennzeichnet, dass** die Trennvorrichtung (3) ein Trennmedium aufweist, welches durch einen Koaleszenzabscheider, eine Zentrifuge und/oder ein Filter gebildet ist.

6. Trennanordnung nach einem der vorhergehenden Ansprüche, **dadurch gekennzeichnet, dass** die Trennvorrichtung eine Temperiereinrichtung aufweist, mittels der sie beheizt oder gekühlt werden kann.

7. Trennanordnung nach einem der vorhergehenden Ansprüche, **dadurch gekennzeichnet, dass** die Trennvorrichtung mit einer Dosiereinrichtung versehen ist, mittels derer der Dispersion zur Beschleunigung des Trennprozesses ein Spaltmittel zufügbar ist.

8. Trennanordnung nach einem der vorhergehenden Ansprüche, **dadurch gekennzeichnet, dass** die Leitung (7) zwischen Verdampfungseinrichtung (2) und Trennvorrichtung (3) in ihrem Verlauf zumindest ein Sperrorgan (8) aufweist.

9. Trennanordnung nach einem der vorhergehenden Ansprüche, **dadurch gekennzeichnet, dass** an der Trennvorrichtung (3) wenigstens ein Sensor (9) zur Bestimmung der Füllstandshöhe der getrennten dispersen Phase (11) angeordnet ist.

10. Trennanordnung nach einem der vorhergehenden Ansprüche, **dadurch gekennzeichnet, dass** die Trennvorrichtung (3) mit wenigstens einer verschließbaren Öffnung oder einer die Vorrichtungsbegrenzung durchtretenden, sperrbaren Leitung (12) versehen ist, über die wenigstens eine der getrennten Phasen (10, 11) der Dispersion aus der Trennvorrichtung (3) ableitbar ist.

11. Trennanordnung nach einem der vorhergehenden Ansprüche, **dadurch gekennzeichnet, dass** an der Trennvorrichtung (3) wenigstens eine weitere verschließbare Öffnung (17, 18) angeordnet ist, über welche der Druck in der Trennvorrichtung (3) manipulierbar ist.

12. Trennanordnung nach einem der vorhergehenden Ansprüche, **dadurch gekennzeichnet, dass** diese mit einer Messeinrichtung zur Erfassung einer Steuergröße hinsichtlich der Konzentration der Dispersion in der Verdampfungseinrichtung versehen ist.

13. Verfahren zur Aufarbeitung von Abwässern, die eine Dispersion aus Wasser als kontinuierlicher und einer mit Wasser nicht mischbaren, organischen Kohlenwasserstoffverbindung als disperser Phase aufweisen, mit einer Trennanordnung (1) nach einem der vorhergehenden Ansprüche **gekennzeichnet durch** zumindest die folgenden Verfahrensschritte:
a) Aufkonzentration der dispersen Phase der Dispersion in einer Verdampfungseinrichtung (2) **durch** Destillation des in deren Bodenbereich befindlichen Verdampfersumpfs;
b) Bei Erreichen eines vorgebbaren Kriteriums Ausschleusen zumindest eines Teils der den Verdampfersumpf bildenden aufkonzentrierten Dispersion in eine Trennvorrichtung (3);
c) Ruhenlassen des ausgeschleusten Teils der Dispersion in einem Behältnis (23) der Trennvorrichtung (3) bis zur Trennung der Phasen der Dispersion;
d) Ausschleusen der aufschwimmenden Phase aus der Trennvorrichtung (3);
e) Ausschleusen der übrigen Phase aus der Trennvorrichtung (3).
f) Wiederholung der Schritte a)-e)

14. Verfahren nach Anspruch 13, **dadurch gekennzeichnet, dass** die getrennte kontinuierliche Phase (10) in den Verdampfersumpf zurückgeführt wird.

15. Verfahren nach Anspruch 13 oder 14, **dadurch gekennzeichnet, dass** die Trennvorrichtung (3) mit der Dispersion drucklos befüllt wird.

16. Verfahren nach einem der Ansprüche 13 bis 15, **dadurch gekennzeichnet, dass** unter Umkehrung der Reihenfolge der Schritte d) und e) zunächst die unterhalb der Grenzfläche befindliche Phase aus der Trennvorrichtung ausgeschleust wird.

17. Verfahren nach einem der Ansprüche 13 bis 16, **dadurch gekennzeichnet, dass** der Vorgang des Ruhenlassens der Dispersion in Punkt c) durch einen Zentrifugier- oder dergleichen Abscheide- und/oder einen Filtriervorgang ergänzt oder ersetzt wird.

18. Verfahren nach einem der Ansprüche 13 bis 17, **dadurch gekennzeichnet, dass** der Vorgang des Ruhenlassens der Dispersion in Punkt c) durch Beheizen oder Kühlen ergänzt oder ersetzt wird.

19. Verfahren nach einem der Ansprüche 13 bis 18, **dadurch gekennzeichnet, dass** der Vorgang des Ruhenlassens der Dispersion in Punkt c) durch Dosierung eines Spaltmittel ergänzt oder ersetzt wird.

20. Verfahren nach einem der Ansprüche 13 bis 19, **dadurch gekennzeichnet, dass** das Kriterium zum Ausschleusen des Teils der aufkonzentrierten Dispersion aus der Verdampfungseinrichtung (2) in die Trennvorrichtung (3) durch eine Messeinrichtung zur Bestimmung der Zeit, der Konzentration oder des Energiebedarfs ermittelt wird.
